# EUROPEAN PATENT APPLICATION

(11) **EP 1 508 724 A2**
(43) Date of publication of application: **23.02.2005**
(21) Application number: 04018400.4
(22) Date of filing: 03.08.2004
(51) Int. Cl.: F16H 15/38

(54) **Toroidal type continuously variable transmission**

(30) Priority: 19.08.2003 JP 2003295094; 09.12.2003 JP 2003410817
(71) Applicant: NSK LTD, Shinagawa-ku, Tokyo (JP)
(72) Inventor: Shinoda, Osamu, Fujisawa-shi, Kanagawa (JP)
(74) Representative: Grünecker, Kinkeldey, Stockmair & Schwanhäusser Anwaltssozietät

(57) **Abstract**

A toroidal type continuously variable transmission has an input side disk (2), an output side disk (5), a pivot shaft (9), at least one of supporting member, a power roller (6) and a loading cam device. The loading cam device has a cam plate (15), a first cam surface (18) and a second cam surface (19), a plurality of roller (17) clamped between the one disk and the cam plate (15) and a retainer (16) rollably retaining the each of the roller (17). The retainer (16) is made of carburized or carbonitriding steel, the retainer has a hardened surface layer having a hardness Hv of 653 or more and a thickness of the hardened surface layer ranges from 0.2 to 0.7 mm.

## Description

The present invention claims foreign priorities to Japanese patent application Nos. JP.2003-295094, filed on August 19, 2003 and JP. 2003-410817, filed on December 9, 2003, the contents of which are incorporated herein by reference.

### BACKGROUND OF THE INVENTION

### 1. Field of the Invention

The toroidal type continuously variable transmission according to the present invention is used as a transmission unit for automatic transmission of an automobile or as a transmission for adjusting the operating speed of various industrial machines such as pump.

### 2. Description of the Related Art

As disclosed in Japanese Patent Unexamined Publication JP-A-2-283949, the use of a toroidal type continuously variable transmission as shown in Figs. 1 to 3 as an automobile transmission of an automatic has been studied and practiced in some fields. This toroidal type continuously variable transmission is called double cavity type continuously variable transmission including a pair of input side disks 2, 2 born by an input shaft 1 on the periphery of the respective end thereof with ball splines 3, 3, respectively. Accordingly, both the input side disks 2, 2 are born by the input shaft 1 concentrically with each other in such an arrangement that they can rotate symmetrically with each other. Further, an output gear 4 is born by the input shaft 1 on the periphery of the middle portion thereof in such an arrangement that it can rotate relative to the input shaft 1. A pair of output side disks 5, 5 are spline-engaged with the respective end of a cylindrical portion provided on the central portion of the output gear 4. In this arrangement, both the output side disks 5, 5 rotate symmetrically with the output gear 4.

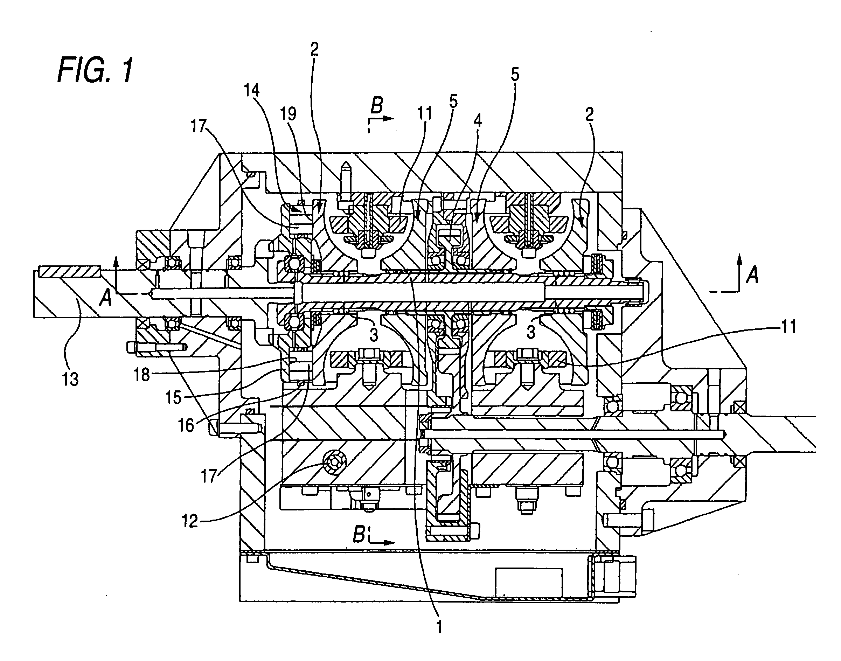

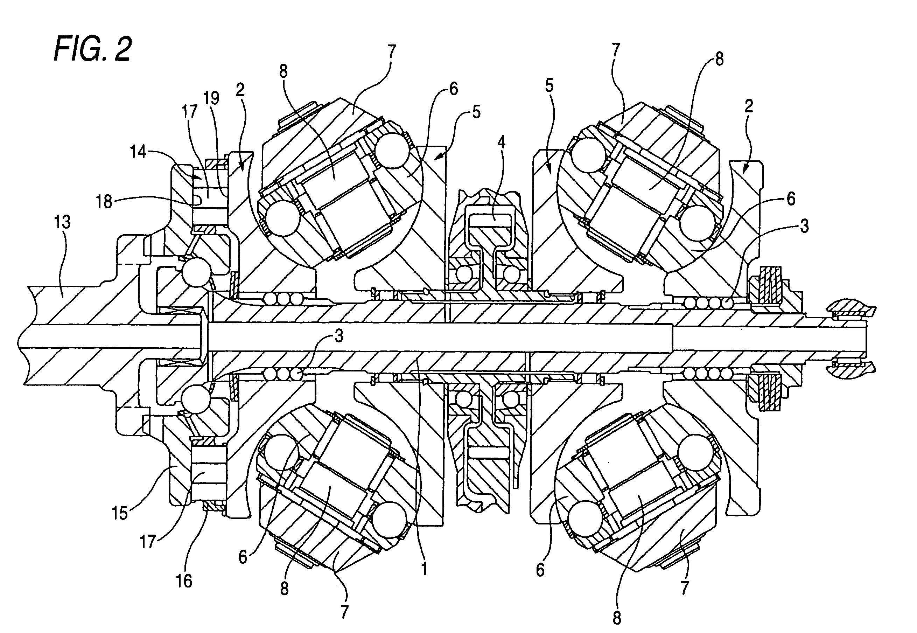

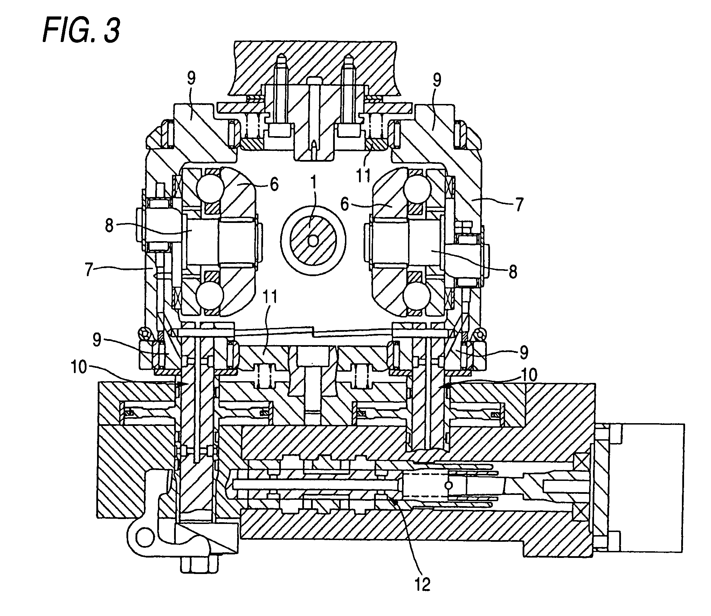

Further, aplurality (normally two or three) of power rollers 6, 6 are clamped between the input side disks 2, 2 and the output side disks 5, 5, respectively. The power rollers 6, 6 are rotatably born by the inner surface of trunnions 7, 7 with bearing shafts 8, 8 and a plurality of rolling bearings. The trunnions 7, 7 can rock on pivot shafts 9, 9 provided concentrically with each other for each of the trunnions 7, 7 on the respective axial end (upper and lower ends as viewed in Figs. 1 and 3 and both ends perpendicular to Fig. 2). The inclination of the trunnions 7, 7 is carried out by using hydraulic actuators 10, 10 to cause the trunnions 7, 7 to be displaced along the axial direction of the pivot shafts 9, 9, respectively. The inclination angle of the trunnions 7, 7 are hydraulically and mechanically synchronized with each other.

In some detail, in order to change the inclination angle of the trunnions 7, 7 and hence the transmission ratio of the input shaft 1 to the output gear 4, the actuators 10, 10 are operated to cause the trunnions 7, 7 to be displaced in opposite directions, e.g., the power roller 6 disposed at right side as viewed in Fig. 3 to be displaced downward as viewed in the drawing. The power roller 6 disposed at left side as viewed in Fig. 3 to be displaced upward as viewed in the drawing. As a result, the direction of tangential forces acting on the contact areas of the peripheral surfaces of the power rollers 6, 6 with the inner surface of the input side disks 2, 2 and the output side disks 5, 5 change (a side slip occurs on the contact area). With the change of the direction of the tangential force, the trunnions 7, 7 rock (swing) on the pivot shaft 9, 9 born by the supporting plates 11, 11, respectively, inoppositedirections. Asaresult, the contact positions of the peripheral surfaces of the power rollers 6, 6 with the inner surfaces of the input and output side disks 2, 5 change. That causes the change of the rotary speed ratio of the input shaft 1 to the output gear 4. The feed and discharge of hydraulic oil to and from the actuators 10, 10 are carried out by one transmission ratio controlling valve 12 regardless of the number of the actuators 10, 10. The movement of one of the trunnions 7 is fed back to the transmission ratio controlling valve 12.

In order to shift a transmission ratio, the transmission ratio controlling valve 12 is opened at a flow path in a predetermined direction. As a result, hydraulic oil is fed to the actuators 10, 10 in a predetermined direction so that the actuators 10, 10 cause the trunnions 7, 7 to be displaced in a predetermined direction. In other words, with the feed of hydraulic oil, the trunnions 7, 7 rock on the pivot shaft 9, 9 while making displacement along the pivot shaft 9, 9. The movement of any one of the trunnions 7 (axial and swinging displacement) is then transferred to the transmission ratio controlling valve 12 to close the flow path of the transmission ratio controlling valve 12 so that the feed and discharge of hydraulic oil to and from the actuators 10, 10 are suspended.

During the operation of the toroidal type continuously variable transmission having the aforementioned arrangement, the driving shaft 13 connected to a power source such as engine causes one of the input side disks 2 (disposed at left side as viewed in Figs. 1 and 2) to rotate while being pressed toward the output side disk 5 via the loading cam device 14. The loading cam device 14 includes a cam plate 15 born by the periphery of the end of the input shaft 1 concentrically with the input side disk 2 in such an arrangement that it can rotate relative to the input shaft 1 and a plurality (e.g., four) of rollers 17, 17 rollably retained by the retainer 16. The camplate 15 has a driving side cam surface 18 formed on one side thereof (right side as viewed in Figs. 1 and 2) as a circumferential unevenness. The one input side disk 2 has a driven side cam surface 19 having the same shape as that of the driving side cam surface 18 formed on the outer surface thereof (left side as viewed in Figs. 1 and 2). The retainer 16 retains the plurality of rollers 17, 17 rollably on the axis extending radially from the center of the input shaft 1.

During the operation of the toroidal type continuously variable transmission having the aforementioned arrangement, when the driving shaft 13 rotationally drives the cam plate 15, the driving side cam surface 18 presses the plurality of rollers 17, 17 against the driven side cam surface 19 formed on the outer surface of the one input side disk 2. As a result, the one input side disk 2 is pressed against the plurality of power rollers 6, 6. At the same time, the pressing of the driving side cam surface 18 and the driven side cam surface 19 against the plurality of rollers 17, 17 causes the one input side disk 2 to rotate. Further, at the same time, the other input side disk 2 (disposed at right side as viewed in Figs. 1 and 2) rotates in the same direction. The rotation of both the input side disks 2, 2 is transmitted to both the input side disks 5, 5 via the plurality of power rollers 6, 6 to cause the output gear 4 disposed between both the output side disks 5, 5 to rotate.

In order to reduce the rotary speed of the output gear 4 from that of the input shaft 1 in the case where the rotary speed of the output gear 4 is set different from that of the input shaft 1, the actuators 10, 10 are operated to cause the trunnions 7, 7 to move along the axial direction of the pivot shaft 9, 9 and rock to the position shown in Fig. 2. The peripheral surfaces of the power rollers 6, 6 are brought into contact with the inner surface of the input side disks 2, 2 on the position closer to the center thereof and the inner surface of the output side disks 5, 5 on the position closer to the periphery thereof. On the contrary, in order to raise the rotary speed of the output gear 4 from that of the input shaft 1, the trunnions 7, 7 are caused to rock in the direction opposite to that of Fig. 2 to swing the trunnions 7, 7 such that the peripheral surface of the power rollers 6, 6 are brought into contact with the inner surface of the input side disks 2, 2 on the position closer to the periphery thereof and the inner surface of the output side disks 5, 5 on the position closer to the center thereof as opposed to the state shown in Fig. 2. When the inclination angle of the trunnions 7, 7 are set intermediate between the two values, the intermediate transmission ratio (speed ratio) of the input shaft 1 to the output gear 4 can be obtained.

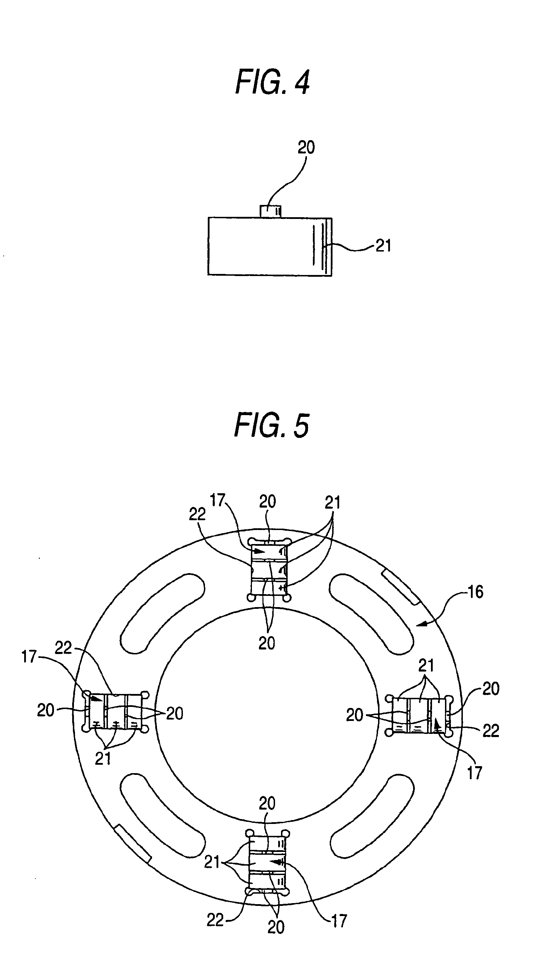

As the rollers 17, 17 constituting the loading cam device 14 to be incorporated in the toroidal type continuously variable transmission as mentioned above there are known those disclosed in Japanese Patent Unexamined Publication JP-A-1-299358. The rollers 17 disclosed in Patent Reference 2 each include roller elements 21, 21 having a narrow width and a plurality (3 in the example shown) of small diameter protrusion 20 formed on the center of one end surface (upper end surface as viewed in Fig. 4) as shown in Fig. 4 arranged axially in series combination as shown in Fig. 5. These rollers 17, 17 are rollably retained by the retainer 16 in the interior of rectangular pockets 22 formed radially therein at a plurality of positions along the circumference thereof. During the operation of the loading cam device 14, the roller elements 21, 21 provided in the interior of the pockets 22, 22 rotate independently of each other. This arrangement is intended to absorb the difference between the speed at the inner side and at the outer side of the driving side cam surface 18 and the driven side cam surface 19.

It has heretofore been known that during the operation of a toroidal type continuously variable transmission having a loading cam device 14 as mentioned above incorporated therein, when the speed is suddenly accelerated or decelerated to cause the torque transmitted by the toroidal type continuously variable transmission to change suddenly, the thrust force (pressing force) generated by the loading cam device 14 temporarily decreases. It has also been heretofore known that the aforementioned temporary drop of the thrust force of the loading cam device 14 is attributed to the frictional resistance or the inertial mass of the various portions of the loading cam device 14. In any case, when the thrust force of the loading cam device 14 decreases so remarkably that it cannot be sufficiently obtained, the pressure (pressing force) at the contact area (traction area) of the inner surface of the input side disk 2 and the output side disk 5 with the peripheral surface of the power rollers 6, 6 runs short. Consequently, slippage occurs at the contact areas to cause the racing of the toroidal type continuously variable transmission and hence the deterioration of durability of the rolling contact area. In addition, the power transmission efficiency is reduced. In remarkable cases, the power transmission can fail.

In the light of these circumstances, it has heretofore been proposed to reduce the inertial mass of the retainer by reducing the external diameter of a part of the retainer at a position circumferentially deviated from the pocket as disclosed in Patent Reference 3 or making the retainer of a synthetic resin as disclosed in Patent Reference 4. It has been further proposed to reduce the rotary resistance of the rollers by making the rollers of ceramic so that the centrifugal force acting on them is reduced as disclosed in Patent Reference 5.

However, when the inertial mass of the retainer is reduced as disclosed in Japanese Utility Model Unexamined Publication JP-UM-A-5-3714 and JP-UM-A-6-14602, the strength of the retainer is reduced. It is thus likely that the retainer can deform by weight of itself or the centrifugal force given by the rollers retained in the pockets during high speed operation of the toroidal type continuously variable transmission. When the retainer has thus deformed, the rollers cannot roll smoothly, making it impossible to prevent temporary drop of thrust force generated by the loading cam device when the torque transmitted by the toroidal type continuously variable transmission suddenly changes. However, when a cut portion is provided at a site deviated from the pocket of the retainer or the retainer is formed by a synthetic resin, the strength of the retainer is deteriorated, making it likely that the retainer can deform by its own weight or by the weight of the rollers during high speed rotation. Further, the retainer is more subject to abrasion at the pocket thereof due to contact with the rollers, causing the looseness of the rollers at the pocket of the retainer that enhances vibration. As disclosed in Japanese Patent Unexamined Publication JP-A-2003-74658, when these rollers are made of ceramic, this problem can rarely occur. However, this approach unavoidably adds to cost. In order to further improve the performance of the retainer, the reduction of the weight of both the retainer and the roller is preferably realized. However, this approach causes the aforementioned problems.

Apart from the temporary drop of thrust force, the deterioration of performance can occur due to the friction of the inner surface of the pockets provided in the retainer. In other words, since the inner surface of the pockets rub against the surface of the rollers, the inner surface of the pockets are worn after prolonged operation, making it likely that the gap between the inner surface of the pockets and the surface of the rollers can increase. When the gap increases to a certain extent, the retainer becomes looser, making it likely that the toroidal type continuously variable transmission can generate more vibration or noise during its operation.

### SUMMARY OF THE INVENTION

The invention has been worked out in the light of these problems. An aim of the invention is to provide a toroidal type continuously variable transmission capable of providing good power transmission without causing deformation of retainer or looseness of rollers.

Further, the invention has been worked out to realize a retainer structure to be incorporated in a loading cam device which can be provided with a sufficient strength and rendered little subject to abrasion on the inner surface of the pocket due to rubbing against the surface of the roller even when the weight thereof is reduced.

In all the toroidal type continuously variable transmissions of the invention, the retainer incorporated in the loading cam device is made of carburized or carbonitriding steel (case hardening steel).

According to a first aspect of the invention, there is provided a toroidal type continuously variable transmission having an input side disk, an output side disk that is concentrically disposed about a mutual central axis of the input and output side disks, a pivot shaft provided so as to be torsionally positioned with respect to the central axis, at least one of supporting member provided between the input side disk and the output side disk, the supporting member swinging about the pivot shaft, a power roller rotatably supported on the supporting member and a loading cam device for pressing one of the input side disk and the output side disk toward the other disk during the transfer of rotation between the input side disk and the output side disk. Wherein the loading cam device has a cam plate rotatably disposed with the one disk, a first cam surface and a second cam surface formed as circumferential unevenness on the opposing surfaces of the one disk and the cam plate, a plurality of roller clamped between the one disk and the cam plate and a retainer rollably retaining the each of the roller. Wherein the retainer is made of carburized or carbonitriding steel, the retainer has a hardened surface layer having a hardness Hv of 653 or more and a thickness of the hardened surface layer ranges from 0.2 to 0.7 mm.

According to a second aspect of the present invention, there is provided a toroidal type continuously variable transmission having an input side disk, an output side disk that is concentrically disposed about a mutual central axis of the input and output side disks, a pivot shaft provided so as to be torsionally positioned with respect to the central axis, at least one of supporting member provided between the input side disk and the output side disk, the supporting member swinging about the pivot shaft, a power roller rotatably supported on the supporting member and a loading cam device for pressing one of the input side disk and the output side disk toward the other disk during the transfer of rotation between the input side disk and the output side disk. Wherein the loading cam device has a cam plate rotatably disposed with the one disk, a first cam surface and a second cam surface formed as circumferential unevenness on the opposing surfaces of the one disk and the cam plate, a plurality of roller clamped between the one disk and the cam plate and a retainer rollably retaining the each of the roller. Wherein the retainer is made of carburized or carbonitriding steel and the retainer has a surface hardness HRC (Rockwell hardness C scale) of 55 or more.

According to a third aspect of the present invention as set forth in the first aspect of the present invention, wherein the retainer has a plurality of pocket provided in a radial direction along the circumference thereof and an inner surface of the pocket has a smooth surface which is formedby grinding the inner surface of the pocket that has been carburized or carbonitrided.

According to a fourth aspect of the present invention as set forth in the second aspect of the present invention, wherein the retainer has a plurality of pocket provided in a radial direction along the circumference thereof and an inner surface of the pocket has a smooth surface which is formedby grinding the inner surface of the pocket that has been carburized or carbonitrided.

According to a fifth aspect of the present invention as set forth in the second aspect of the present invention, wherein the retainer has a hardened surface layer having a hardness Hv of 653 or more and a thickness of the hardened surface layer is ranging from 0.2 to 0.7 mm.

According to a sixth aspect of the present invention as set forth in the second aspect of the present invention, wherein the retainer has the hardened surface layer having a hardness Hv of 653 or more.

According to a seventh aspect of the present invention, there is provided a toroidal type continuously variable transmission having an input side disk, an input shaft and a loading cam device that transmits a rotation torque of the input shaft to the input side disk. The loading cam device has a cam plate fixed to an end of the input shaft, a first cam surface formed on the input side disk so as to be opposed to the cam plate, a second cam surface formed on the cam plate so as to be opposed to the first cam surface, a plurality of roller disposed between the second cam surface and the first cam surface and a retainer that retains the rollers rollable in a circumferential direction of the input side disk. Wherein the retainer is made of carburized or carbonitriding steel and a surface carbon concentration of the retainer is from 0.9 to 1.2% by weight.

According to an eighth aspect of the present invention as set forth in the seventh aspect of the present invention, wherein a surface nitrogen concentration of the retainer is from 0.05 to 0.4% by weight.

According to a ninth aspect of the present invention as set forth in the first aspect of the present invention, wherein the toroidal type continuously variable transmission is used in a double cavity toroidal type continuously variable transmission.

According to a tenth aspect of the present invention as set forth in the first aspect of the present invention, wherein the retainer is made of chromium molybdenum steel.

According to an eleventh aspect of the present invention as set forth in the first aspect of the present invention, wherein a surface carbon concentration of the retainer is from 0.9 to 1.2% by weight.

According to a twelfth aspect of the present invention as set forth in the first aspect of the present invention, wherein a surface nitrogen concentration of the retainer is from 0.05 to 0.4% by weight.

According to a thirteenth aspect of the present invention as set forth in the seventh aspect of the present invention, wherein the retainer has a hardened surface layer having a hardness Hv of 653 or more and a thickness of the hardened surface layer ranges from 0.2 to 0.7 mm.

According to a fourteenth aspect of the present invention as set forth in the seventh aspect of the present invention, wherein the retainer has a surface hardness HRC (Rockwell hardness C scale) of 55 or more.

### BRIEF DESCRIPTION OF THE DRAWINGS

Fig. 1 is a sectional view illustrating an example of toroidal type continuously variable transmission that has heretofore been known;
Fig. 2 is a sectional view taken on the line A-A of Fig. 1;
Fig. 3 is a sectional view taken on the line B-B of Fig. 1;
Fig. 4 is a side view of a roller element constituting a loading cam device;
Fig. 5 is a side view of a roller and a retainer constituting a loading cam device;
Fig. 6 is a side view of a retainer subjected to durability test;
Fig. 7 is a diagram illustrating the results of the durability test of Example 2;
Fig. 8 is a diagram illustrating an essential part of a toroidal type continuously variable transmission according to an embodiment of implementation of the invention;
Fig. 9 is a plan view of the retainer shown in Fig. 8;
Fig. 10 is a diagram illustrating the relationship between the surface carbon concentration and the strength of the retainer;
Fig. 11 is a diagram illustrating the relationship between the surface carbon concentration and the percent deformation of the retainer;
Fig. 12 is a diagram illustrating the relationship between the surface nitrogen concentration and the abrasion ratio of the retainer; and
Fig. 13 is a diagram illustrating the relationship between the surface nitrogen concentration and the impact strength ratio of the retainer.

### DETAILED DESCRIPTION OF THE PREFERRED EMBODIMENTS

In the implementation of the invention, it is preferred that the inner surface of the pocket be subjected to grinding after carburizing or carbonitriding to form a smooth surface. In this arrangement, an oil film can be formed between the inner surface of the pocket and the surface of the roller to inhibit abrasion of the inner surface of the pocket and the surface of the roller.

It is also preferred that the first and the second aspects of the present invention be combined with each other to provide the retainer with a surface hardness HRC of 55 or more and form a hardened surface layer having a hardness Hv of 653 or more on the surface of the retainer to a deepness of from 0.2 to 0.7 mm. In this arrangement, the strength and abrasion resistance of the retainer can be kept high.

More preferably, the surface hardness HRC of the retainer is predetermined to be 58 or more. In this arrangement, the abrasion resistance of the retainer can be kept higher.

The toroidal type continuously variable transmission of the invention is characterized in that the properties of the retainer constituting the loading cam device are properly designed to provide the retainer with desired strength and abrasion resistance. Since the configuration of the toroidal type continuously variable transmission shown in the drawing, including those shown in Figs. 1 to 5, is the same as that of toroidal type continuously variable transmissions having various configurations, duplicated description will be omitted. The invention will be further described hereinafter with reference to experiments which were made to confirm the advantage of the invention.

### [Example 1]

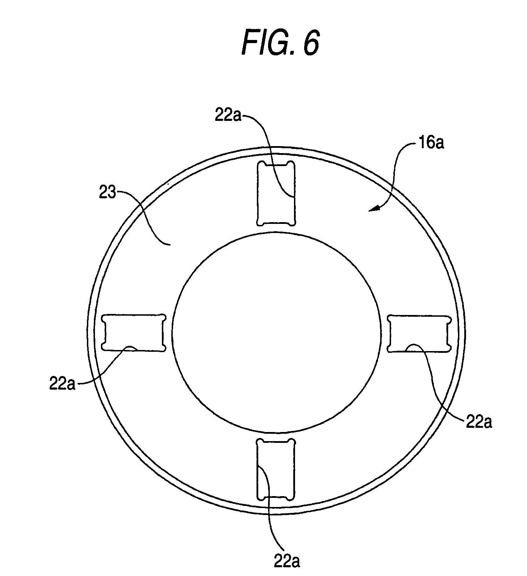

Firstly, an experiment which was made to confirm the advantage of the invention according to the first aspect of the present invention will be described. An SCM420 steel material (JIS G 4105), which is a chromium-molybdenum steel that can be used a carburizing steel, was subjected to cutting to prepare a retainer 16a as shown in Fig. 6. The retainer 16a has rectangular pockets 22a, 22a formed at four positions disposed apart from each other at an equal interval along the circumference of the radially middle portion of an annular main portion 23.

The retainer 16a was then subjected to carburizing or carbonitriding under the following conditions to prepare 10 samples (EmbodimentNos. 1 to 10) fallingwithin the technical scope of the invention according to the first aspect of the present invention and 8 samples (Comparative Examples 1 to 8) which deviate from the technical scope of the invention, totaling 18 samples.

**Table 1**

| | Heat treatment | Depth of hardened layer (mm) | Results of durability test | Remarks |
|---|---|---|---|---|
| Embodiment 1 | Carburizing | 0.2 | Good | |
| Embodiment 2 | | 0.4 | Good | |
| Embodiment 3 | | 0.5 | Good | |
| Embodiment 4 | | 0.6 | Good | |
| Embodiment 5 | | 0.7 | Good | |
| Embodiment 6 | Carbonitriding | 0.2 | Good | |
| Embodiment 7 | | 0.4 | Good | |
| Embodiment 8 | | 0.5 | Good | |
| Embodiment 9 | | 0.6 | Good | |
| Embodiment 10 | | 0.7 | Good | |
| Comparative Example 1 | Carburizing | 0.05 | Poor | Test suspended due to increase of vibration |
| Comparative Example 2 | | 0.1 | Poor | Test suspended due to increase of vibration |
| Comparative Example 3 | | 0.8 | Good | |
| Comparative Example 4 | | 1.0 | Good | |
| Comparative Example 5 | Carbonitriding | 0.05 | Poor | Test suspended due to increase of vibration |
| Comparative Example 6 | | 0.1 | Poor | Test suspended due to increase of vibration |
| Comparative Example 7 | | 0.8 | Good | |
| Comparative Example 8 | | 1.0 | Good | |

Among the 18 samples set forth in Table 1 above, 9 samples, i.e., Embodiments 1 to 5 and Comparative Examples 1 to 4 were subjected to carbonitriding under the following conditions to form a carburized hardened layer on the surface thereof.

### [Carburizing conditions]

- Atmospheric gas:: Rx gas + enriched gas
- Carburizing temperature:: 950°C (variable within a range of 920°C to 980°C)
- Carburizing time:: Variable within a range of 1 to 10 hours depending on the depth of the hardened layer to be formed

### [Post-treatment]

The material which had been subj ected to carburizing was allowed to cool, subjected to hardening (oil quenching) at 840°C for 1 hour, subjected to tempering at 180°C, freed of heat-treating scale, and then subjected to grinding.

Among the 18 samples set forth in Table 1 above, the other nine samples, i.e., Embodiments 6 to 10 and Comparative Examples 5 to 8 were subjected to carbonitriding under the following conditions to form a carbonitriding hardened layer on the surface thereof.

### [Carbonitriding conditions]

- Atmospheric gas:: Rx gas + enriched gas + ammonia gas
- Carbonitriding temperature:: 920°C (variable within a range of 830°C to 960°C)
- Carbonitriding time:: Variable within a range of 1 to 20 hours depending on the depth of the hardened layer to be formed

### [Post-treatment]

### Same as in the carburizing treatment

Through the aforementioned continuous treatment, retainers having a carburized hardened layer or carbonitriding hardened layer provided on the surface thereof were obtained. In some detail, 18 samples having different thickness of hardened surface (i.e., distances between the surface of the retainer and the portion having a hardness Hv of 653), i.e., 0.05 mm, 0.1 mm, 0.2 mm, 0.4 mm, 0.5 mm, 0.6 mm, 0.7 mm, 0.8 mm and 1 mm as set forth in Table 1 were prepared. The 18 samples thus prepared were each incorporated in the loading cam device which was then subjected to durability test under the following conditions. Embodiments 1 to 10 each had a surface carbon concentration of from 0.9 to 1.2% by weight and a surface hardness HRC of 58 or more. Embodiments 6 to 10 had a nitrogen concentration of from 0.05 to 0.4% by weight.

### [Durability test conditions]

| | |
|---|---|
| Rotary speed | 6000 min⁻¹ |
| Testing time | 10 hours |

As a result of the durability test under these conditions, the loading cam devices including a retainer having a hardened layer depth of 0.2 mm or more (Examples 1 to 10; Comparative Examples 3, 4, 7 and 8) maintained good rotary properties even after 10 hours within which the aforementioned testing time is expired regardless of which the hardened layer is a carburized layer or a carbonitriding layer. The loading cam devices thus tested were each then disassembled to observe the retainer. As a result, the retainers each showed little deformation and abrasion on the inner surface of the pocket. On the contrary, Comparative Examples 1, 2, 5 and 6, which each have a hardened layer depth of less than 0.2 mm, showed an increase of vibration before the elapse of 10 hours of testing time. The durability test on these comparative examples was then suspended. The retainer was then withdrawn from these comparative examples to observe their pocket portion. As a result, the inner surface of the pocket was observed worn due to contact with the roller. As can be seen in the results of the aforementioned experiment, the retainers having a hardened surface layer having hardness Hv of 653 or more formed thereon to a depth of from 0.2 to 0.7 mm exhibit an excellent strength and abrasion resistance and a sufficient durability. Comparative Examples 3, 4, 7 and 8, which each have a hardened surface layer formed thereon to a depth of more than 0.7 mm, each exhibit an excellent durability but add to production cost as previously mentioned.

### [Example 2]

An experiment which was made to confirm the advantage of the second aspect of the present invention will be described. An SCM420 steel material (JIS G 4105), which is a chromium-molybdenum steel that can be used a carburizing steel, was subjected to cutting to prepare a retainer 16a as shown in Fig. 6 as in Example 1.

The retainer 16a was then subjected to carburizing or carbonitriding under the following conditions to prepare 6 samples (Embodiment Nos . 11 to 16) falling within the technical scope of the invention according to the second aspect of the present invention and 3 samples (Comparative Examples 9 to 11) which deviate from the technical scope of the invention, totaling 9 samples.

**Table 2**

| | Surface hardness HRC |
|---|---|
| Embodiment 11 | 55.0 |
| Embodiment 12 | 56.2 |
| Embodiment 13 | 58.0 |
| Embodiment 14 | 59.9 |
| Embodiment 15 | 61.8 |
| Embodiment 16 | 63.9 |
| Comparative Example 9 | 50.2 |
| Comparative Example 10 | 52.3 |
| Comparative Example 11 | 53.9 |

The 9 samples set forth in Table 2 above were each subjected to carburizing under the following conditions to form a carburized hardened layer on the surface thereof.

### [Carburizing conditions]

- Atmospheric gas:: Rx gas + enriched gas (flow rate adjusted depending on the desired surface hardness)
- Carburizing temperature:: 950°C (variable within a range of from 920°C to 980°C)
- Carburizing time:: Variable within a range of from 1 to 10 hours depending on the depth of the hardened layer to be obtained

### [Post-treatment]

The material which had been subjected to carburizing was allowed to cool, subjected to hardening (oil quenching) at 840°C for 1 hour, subjected to tempering at 180°C, freed of heat-treating scale, and then subjected to grinding.

Through the aforementioned continuous treatment, 9 samples having a carburized hardened layer provided on the surface thereof and a surface hardness HRC ranging from about 50 to 64 were obtained. The 9 retainers thus prepared were each incorporated in the loading cam device which was then subjected to durability test under the following conditions.

### [Durability test conditions]

| | |
|---|---|
| Rotary speed | 6000 min⁻¹ |
| Testing time | 10 hours |

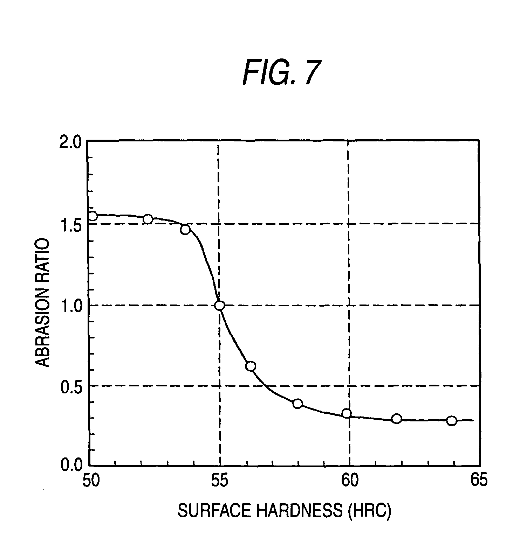

The retainers were each measured for weight before and after the durability test. The value obtained by dividing the weight measured after the durability test by the weight measured before the durability test is defined to be percent abrasion. The value obtained by dividing the percent abrasion by the percent abrasion of Embodiment 11, which has a surface hardness HRC of 55, is defined to be abrasion ratio. The smaller the abrasion ratio is the better is the abrasion resistance. The relationship between the abrasion ratio and the surface hardness was then determined. The results are set forth in Fig. 7.

As can be seen in Fig. 7, the abrasion ratio decreases (the abrasion resistance improves) with the rise of the surface hardness, demonstrating that the abrasion resistance depends on the surface hardness. Further, the abrasion resistance begins to improve suddenly when the surface hardness HRC is beyond 55. When the surface hardness HRC exceeds 58, the degree of improvement of the abrasion resistance becomes mild with the enhancement of the surface hardness. In particular, when the surface hardness HRC falls within a range of from 60 to 62, the effect of improving the abrasion resistance is substantially saturated.

As can be seen in the results of the aforementioned experiment, when the surface hardness HRC is 55 or more, preferably 58 or more, an excellent abrasion resistance can be obtained. The enhancement of the surface hardness to 60 or more makes little sense because it cannot result in the enhancement of abrasion resistance to an extent such that the cost rise can be paid. In particular, the enhancement of the surface hardness HRC to 62 or more is almost nonsense.

In order to enhance the surface hardness of the retainer, carbonitriding may be conducted instead of carburizing. The conditions of carbonitriding is the same as in Example 1.

### [Example 3]

An embodiment of implementation of the invention will be described in connection with the attached drawings.

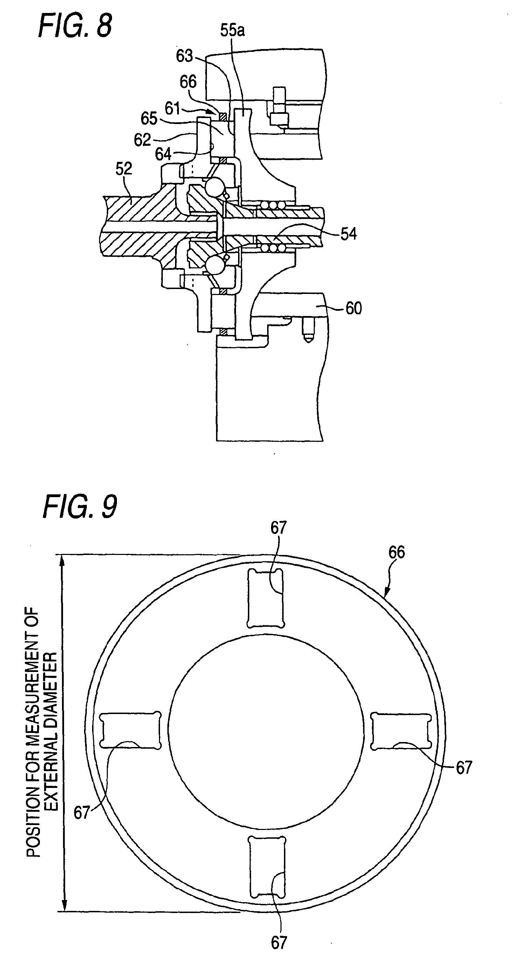

Fig. 8 is a diagram illustrating an essential part of a toroidal type continuously variable transmission according to an embodiment of implementation of the invention. As shown in Fig. 8, the toroidal type continuously variable transmission according to an embodiment of implementation of the invention has a loading cam device 61 for transmitting the rotary torque of an input shaft 52 to an input side disk 55a. The loading cam device 61 has a cam plate 62 fixed to the input shaft 52, a first cam surface 63 formed on the input side disk 55a opposed to the cam plate 62, a second cam surface 64 formed on the cam plate 62 opposed to the first cam surface 63, a plurality of rollers 65 disposed between the second cam surface 64 and the first cam surface 63 and a retainer 66 retaining the rollers 65 rotatably in the circumferential direction of the input side disk 55a.

The retainer 66 is formed by a carburized steel or carbonitriding steel and has a surface carbon concentration of from 0.9 to 1.2% by weight. Further, the surface nitrogen concentration of the retainer 16 is from 0.05 to 0.4% by weight.

By thus predetermining the surface carbon concentration of the retainer 66 formed by carburized steel or carbonitriding steel to a range of from 0.9 to 1.2% by weight, the mechanical strength of the retainer 66 can be enhanced, making it possible to prevent the retainer from deforming by its own weight or by the weight of the rollers during high speed rotation. Further, by predetermining the surface nitrogen concentration of the retainer 66 to a range of from 0.05 to 0.4% by weight, the abrasion resistance of the retainer 66 can be enhanced, causing little abrasion in the pocket 67 (see Fig. 9) of the retainer 66 due to contact with the rollers 65. Thus, the looseness of the rollers 65 during the rotation of the retainer 66 can be prevented.

In order to the aforementioned advantage, the inventors made the following experiment. Firstly, Sample Nos. 1 to 12 specimens set forth in Table 3 were prepared. Sample Nos. 6 to 12 specimens were then subjected to tensile test.

**Table 3**

| Sample No. | Heat treatment | Surface carbon concentration (wt-%) | Surface nitrogen concentration (wt-%) |
|---|---|---|---|
| 1 | Carburizing | 1.02 | 0.05 |
| 2 | | 1.01 | 0.13 |
| 3 | | 1.00 | 0.28 |
| 4 | | 1.04 | 0.40 |
| 5 | | 1.02 | 0.50 |
| 6 | Carbonitriding | 0.59 | - |
| 7 | | 0.81 | - |
| 8 | | 0.90 | - |
| 9 | | 1.02 | - |
| 10 | | 1.09 | - |
| 11 | | 1.20 | - |
| 12 | | 1.28 | - |

In Table 3, Sample Nos. 1 to 5 indicate the results of specimens made of steel according to JIS SCM420 which had been subjected to carbonitriding under the following carbonitriding conditions to adjust the surface carbon concentration and surface nitrogen concentration thereof to a range of from 1.00 to 1.04% by weight and a range of from 0.05 to 0.50% by weight, respectively. On the other hand, Sample Nos. 6 to 12 indicate the results of specimen made of steel according to JIS SCM420 which had been subjected to carburizing under the following carburizing conditions to adjust the surface carbon concentration thereof to a range of from 0.59 to 1.28% by weight.

### B[0013]

### (Carburizing conditions)

- Atmospheric gas:: Rx gas + enriched gas (C.P. = 0.6 to 1.3)
- Treating temperature:: Selected within a range of from 920°C to 980°C
- Treatment time:: From about 1 to 10 hours depending on the surface carbon concentration
- Hardening and tempering after carburizing:: Done (hardening (oil quenching) at 830°C to 880°C x about 1 hour, tempering at 160°C to 200°C x about 2 hours)

### (Carbonitriding conditions)

- Atmospheric gas:: Rx gas + enriched gas + ammonia gas (C.P. = 0.6 to 1.3)
- Treating: temperature: Selected within a range of from 830°C to 980°C
- Treatment time:: From about 1 to 20 hours depending on the surface carbon concentration and the surface nitrogen concentration
- Hardening and tempering after carbonitriding:: Done (hardening (oil quenching) at 830°C to 880°C x about 1 hour, tempering at 160°C to 200°C x about 2 hours)

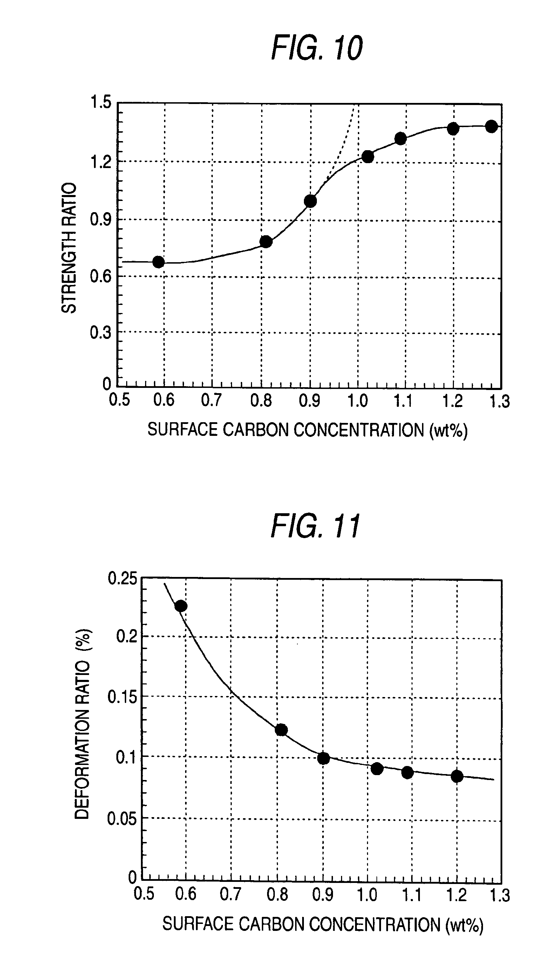

The results of the aforementioned tensile test are shown in Fig. 10. In Fig. 10, the abscissa indicates the surface carbon concentration of the various specimens and the ordinate indicates the ratio relative to Sample No. 9 specimen (surface carbon concentration: 0.9% by weight) the proof strength of which is standardized to 0.2%. In Fig. 10, the dotted line indicates the data only on those having a surface carbon concentration of less than 0.9% by weight which are expected to have a strength ratio of 0.9% by weight or more.

Subsequently, the inventors prepared a retainer shown in Fig. 9 from the same steel material as that of Sample Nos. 6 to 11 specimens as shown Table 3. The retainer was incorporated in the loading cam device which was then subjected to retainer deformation test at a rotary speed of 10, 000 min⁻¹ for 5 hours. After the termination of the test, the portion of the retainer shown in Fig. 9 was then measured for external diameter. The measurements were then evaluated as calculated in terms of percent retainer deformation (= external diameter measured after test/external diameter measured before test). The results of evaluation are shown in Fig. 11.

As can be seen in the results of test shown in Fig. 10, when the surface carbon concentration of the retainer exceeds 0.9% by weight, the difference between the predicted value and the measured value rises with the rise of the surface carbon concentration. When the surface carbon concentration of the retainer is 1.2% by weight or more, the effect of surface carbon concentration is completely saturated. On the contrary, as can be seen in the results of test shown in Fig. 11, when the carbon concentration of the retainer falls below 0.9% by weight, the percent retainer deformation suddenly rises, rendering the retainer more subject to deformation by centrifugal force. It is thus made obvious that when the upper limit and lower limit of the surface carbon concentration of the retainer are predetermined to be 1.2% by weight and 0.9% by weight, respectively, the retainer can be prevented from deforming by its own weight or by the weight of the rollers during high speed rotation.

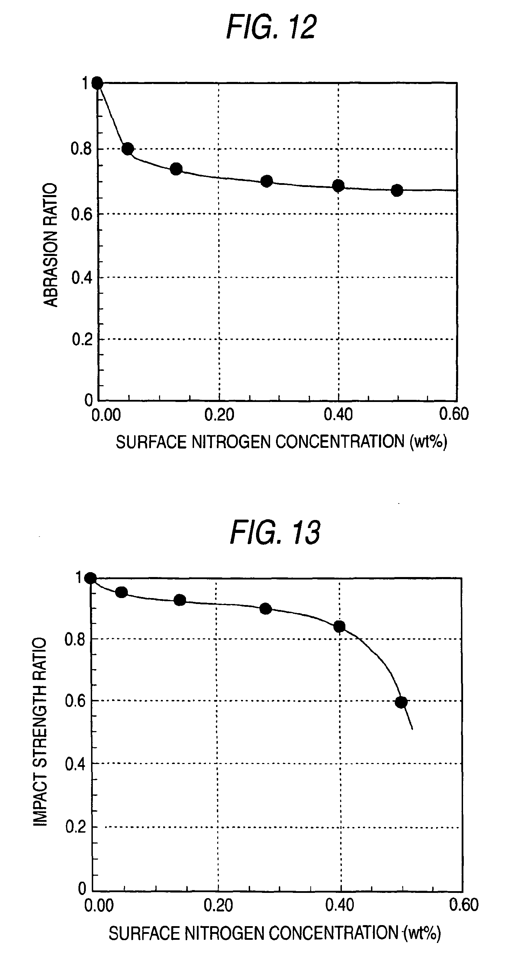

Subsequently, the inventors prepared a retainer shown in Fig. 9 from the same steel material as that of Sample Nos. 1 to 5 and 9 specimens as shown in Table 3. The retainer was incorporated in the loading cam device which was then subjected to retainer deformation test at a rotary speed of 6,000 min⁻¹ for 6 hours. The results of test are shown in Fig. 12. In Fig. 12, the abscissa indicates surface nitrogen concentration and the ordinate indicates abrasion ratio relative to the abrasion of Sample No. 9 specimen as 1.

The inventors further made Charpy impact test on Sample Nos. 1 to 5 and 9 specimens as shown in Table 3 according to JIS Z 2242. The results of test are shown in Fig. 13. In Fig. 13, the abscissa indicates surface nitrogen concentration and the ordinate indicates impact strength ratio relative to impact strength applied to Sample No. 9 specimen as 1.

As can be seen in the results of test shown in Fig. 12, when the surface nitrogen concentration of the retainer falls below 0.05% by weight, the abrasion ratio suddenly rises. On the contrary, as can be seen in the results of test shown in Fig. 13, when the surface nitrogen concentration of the retainer exceeds 0.40% by weight, the impact strength ratio suddenly decreases, causing the deterioration of the impact resistance of the retainer. It is thus made obvious that when the upper limit and lower limit of the surface nitrogen concentration of the retainer are predetermined to 0.05% by weight and 0.4% by weight, respectively, little abrasion due to contact with the rollers can occur in the pocket of the retainer, making it possible to prevent the looseness of the rollers during the rotation of the retainer.

In the case of the toroidal type continuously variable transmission of the invention having the aforementioned arrangement, the hardness of the surface portion of the retainer incorporated in the loading cam device is raised, making it possible to provide the retainer with a desired strength. In this arrangement, the deformation of the retainer can be prevented regardless of centrifugal force applied during high speed rotation, making it possible to stabilize the performance of the loading cam device and the toroidal type continuously variable transmission having the loading cam device incorporated therein. Further, since the inner surface of the pocket is little subject to abrasion due to rubbing against the surface of the roller, the gap between the inner surface of the pocket and the surface of the roller cannot be difficultly raised even after prolonged operation. Thus, looseness of the retainer can be inhibited, making it possible to prevent the increase of vibration or noise during the operation of the toroidal type continuously variable transmission.

Referring to the invention according to the first aspect of the present invention, when the hardness Hv of the hardened surface layer is less than 653, it is made difficult to provide the retainer with sufficient strength and abrasion resistance. Further, even when the hardness Hv of the hardened surface layer is 653 or more, if the thickness of the hardened surface layer is less than 0.2 mm, it is made difficult to provide the retainer withsufficientstrengthandabrasionresistance. On the contrary, when the hardened surface layer has hardness Hv of 653 or more and a thickness of more than 0.7 mm, it cannot be expected that the strength and abrasion resistance of the retainer can be further enhanced. At the same time, the time required to perform carburizing or carbonitriding for the purpose of obtaining the hardened surface layer is uselessly prolonged, causing the cost rise. Further, the thickness of the grain boundary oxide layer increases and an abnormal structure such as initial deposit carbide can easily occur, making it necessary that the grinding margin at grinding step after heat treatment be raised. This, too, adds to cost. Therefore, the hardness Hv and thickness of the hardened surface layer are predetermined to be 653 (at minimum as determined at the deepest point) and from 0.2 to 0.7 mm, respectively.

Referring to the invention according to the second aspect of the present invention, when the surface hardness HRC is less than 55, it is made difficult to provide the retainer with sufficient strength and abrasion resistance.

In both first and second aspect of the present invention, the upper limit of hardness is not specifically limited from the standpoint of performance. However, excess rise of surface hardness is limited from the standpoint of production cost.

The invention of the eighth aspect of the present invention provides the toroidal type continuously variable transmission, wherein the retainer has a surface nitrogen concentration of from 0.05 to 0.4% by weight.

The reason why the surface carbon concentration of the retainer is limited to a range of from 0.9 to 1.2% by weight herein will be described hereinafter.

The strength (deformation resistance) of a steel material which has been subjected to hardening and tempering is governed by the carbon concentration. Therefore, when the surface carbon concentration of the retainer falls below 0.9% by weight, the retainer cannot stand the centrifugal force generated during rotation and deforms. On the contrary, when the surface carbon concentration of the retainer exceeds 1.2% by weight, harmful textures such as initial deposit carbide can easily occur during heat treatment. Further, since the effect of carbon content on the strength of martensitic matrix is saturated when the carbon content of the matrix is about 0.8% by weight, the upper limit of the surface carbon concentration (= sum of the carbon concentration of the matrix and the carbide) is predetermined to be 1.2% by weight.

The reason why the surface nitrogen concentration of the retainer is limited to a range of from 0.05 to 0.4% by weight herein will be described hereinafter.

Nitrogen has a great effect on the abrasion resistance and toughness of the steel material. Therefore, when the surface nitrogen concentration of the retainer falls below 0.05% by weight, the effect of nitrogen on the abrasion resistance is not sufficient. On the contrary, when the surface nitrogen concentration of the retainer exceeds 0.4% by weight, the grindability of the material is deteriorated. Thus, in order to maintain the desired precision of the product, the cost must be unavoidably raised. Further, the effect of excessively precipitated minute nitride causes the deterioration of toughness, leaving something to be desired in resistance to impact load. Accordingly, the surface nitrogen concentration of the retainer is limited to a range of from 0.05 to 0.4% by weight.

In accordance with the toroidal type continuously variable transmission according to the invention of the seventh aspect of the present invention, the mechanical strength of the retainer is enhanced, making it possible to prevent the retainer from deforming by its own weight or by the weight of the rollers during high speed rotation.

In accordance with the toroidal type continuously variable transmission according to the invention of the second aspect of the present invention, the abrasion resistance of the retainer is enhanced, causing little abrasion in the pocket of the retainer due to contact withtherollers. Thus, in addition to the aforementioned advantage, the looseness of the rollers during the rotation of the retainer can be prevented.

While the present embodiment has been described with reference to the case where the invention is applied to a double cavity toroidal type continuously variable transmission, it goes without saying that the invention can be applied also to toroidal type continuously variable transmissions other than double cavity toroidal type continuously variable transmission.

While there has been described in connection with the preferred embodiments of the present invention, it will be obvious to those skilled in the art that various changes and modification may be made therein without departing from the present invention, and it is aimed, therefore, to cover in the appended claim all such changes andmodifications as fall within the true spirit and scope of the present invention.

## Claims

1. A toroidal type continuously variable transmission comprising:
an input side disk;
an output side disk that is concentrically disposed about a mutual central axis of the input and output side disks;
a pivot shaft provided so as to be torsionally positioned with respect to the central axis;
at least one of supporting member provided between the input side disk and the output side disk, the supporting member swinging about the pivot shaft;
a power roller rotatably supported on the supporting member; and
a loading cam device for pressing one of the input side disk and the output side disk toward the other disk during the transfer of rotation between the input side disk and the output side disk,
wherein the loading cam device comprises:
a cam plate rotatably disposed with the one disk;
a first cam surface and a second cam surface formed as circumferential unevenness on the opposing surfaces of the one disk and the cam plate;
a plurality of roller clamped between the one disk and the cam plate; and
a retainer rollably retaining the each of the roller,
wherein the retainer is made of carburized or carbonitriding steel,
the retainer has a hardened surface layer having a hardness Hv of 653 or more and
a thickness of the hardened surface layer ranges from 0.2 to 0.7 mm.

2. A toroidal type continuously variable transmission comprising:
an input side disk;
an output side disk that is concentrically disposed about a mutual central axis of the input and output side disks;
a pivot shaft provided so as to be torsionally positioned with respect to the central axis;
at least one of supporting member provided between the input side disk and the output side disk, the supporting member swinging about the pivot shaft;
a power roller rotatably supported on the supporting member; and
a loading cam device for pressing one of the input side disk and the output side disk toward the other disk during the transfer of rotation between the input side disk and the output side disk,
wherein the loading cam device comprises:
a cam plate rotatably disposed with the one disk;
a first cam surface and a second cam surface formed as circumferential unevenness on the opposing surfaces of the one disk and the cam plate;
a plurality of roller clamped between the one disk and the cam plate; and
a retainer rollably retaining the each of the roller,
wherein the retainer is made of carburized or carbonitriding steel and
the retainer has a surface hardness HRC (Rockwell hardness C scale) of 55 or more.

3. The toroidal type continuously variable transmission as set forth in Claim 1, wherein the retainer has a plurality of pocket provided in a radial direction along the circumference thereof and
an inner surface of the pocket has a smooth surface which is formed by grinding the inner surface of the pocket that has been carburized or carbonitrided.

4. The toroidal type continuously variable transmission as set forth in Claim 2, wherein the retainer has a plurality of pocket provided in a radial direction along the circumference thereof and
an inner surface of the pocket has a smooth surface which is formed by grinding the inner surface of the pocket that has been carburized or carbonitrided.

5. The toroidal type continuously variable transmission as set forth in Claim 2, wherein the retainer has a hardened surface layer having a hardness Hv of 653 or more and
a thickness of the hardened surface layer is ranging from 0.2 to 0.7 mm.

6. The toroidal type continuously variable transmission as set forth in Claim 2, wherein the retainer has the hardened surface layer having a hardness Hv of 653 or more.

7. A toroidal type continuously variable transmission, comprising:
an input side disk;
an input shaft; and
a loading cam device that transmits a rotation torque of the input shaft to the input side disk, the loading cam device comprising:
a cam plate fixed to an end of the input shaft;
a first cam surface formed on the input side disk so as to be opposed to the cam plate;
a second cam surface formed on the cam plate so as to be opposed to the first cam surface;
a plurality of roller disposed between the second cam surface and the first cam surface; and
a retainer that retains the rollers rollable in a circumferential direction of the input side disk,
wherein the retainer is made of carburized or carbonitriding steel and
a surface carbon concentration of the retainer is from 0.9 to 1.2% by weight.

8. The toroidal type continuously variable transmission as set forth in Claim 7, wherein a surface nitrogen concentration of the retainer is from 0.05 to 0.4% by weight.

9. The toroidal type continuously variable transmission as set forth in Claim 1, wherein the toroidal type continuously variable transmission is used in a double cavity toroidal type continuously variable transmission.

10. The toroidal type continuously variable transmission as set forth in Claim 1, wherein the retainer is made of chromium molybdenum steel.

11. The toroidal type continuously variable transmission as set forth in Claim 1, wherein a surface carbon concentration of the retainer is from 0.9 to 1.2% by weight.

12. The toroidal type continuously variable transmission as set forth in Claim 1, wherein a surface nitrogen concentration of the retainer is from 0.05 to 0.4% by weight.

13. The toroidal type continuously variable transmission as set forth in Claim 7, wherein the retainer has a hardened surface layer having a hardness Hv of 653 or more and
a thickness of the hardened surface layer ranges from 0.2 to 0.7 mm.

14. The toroidal type continuously variable transmission as set forth in Claim 7, wherein the retainer has a surface hardness HRC (Rockwell hardness C scale) of 55 or more.
